# EUROPÄISCHE PATENTANMELDUNG

(11) **EP 2 090 473 A1**
(43) Veröffentlichungstag der Anmeldung: **19.08.2009**
(21) Anmeldenummer: 09002115.5
(22) Anmeldetag: 16.02.2009
(51) Int. Cl.: B60R 19/42, B60R 19/38

(54) **Rammschutzvorrichtung für ein Kraftfahrzeug**

(30) Priorität: 15.02.2008 DE 202008002197 U
(71) Anmelder: Graf, Diana, 71083 Herrenberg (DE); Graf, Alfred, 71083 Herrenberg (DE)
(72) Erfinder: Graf, Diana, 71083 Herrenberg (DE); Graf, Alfred, 71083 Herrenberg (DE)
(74) Vertreter: Maser, Jochen

(57) **Zusammenfassung**

Die Erfindung betrifft eine Rammschutzvorrichtung für ein Kraftfahrzeug, die einer Ladekante (17) einer Ladefläche (16) zugeordnet ist und ein Rammelement (24) aufweist, wobei das Rammelement (24) vor dem Be- und Entladevorgang der Ladefläche (16) mit einem Antrieb (34) zum Schutz der Ladekante (17) aus einer Verstauposition (46) in eine Rammschutzposition (44) ausfahrbar ist und das Rammelement (24) und der Antrieb (34) durch zumindest eine stoßabsorbierende Einrichtung (42) miteinander verbunden sind.

## Beschreibung

Die Erfindung betrifft eine Rammschutzvorrichtung für ein Kraftfahrzeug, die einer Ladekante einer Ladefläche zugeordnet ist und ein Rammelement aufweist.

Eine solche Rammschutzvorrichtung wird oftmals feststehend im Ladebereich positioniert, um zu vermeiden, dass beispielsweise beim Be- und Entladen einer Ladefläche mit einem Gabelstapler oder Hubwagen eine Beschädigung des Schwellers durch unachtsame Handhabung erfolgt. Diese Rammelemente weisen jedoch den Nachteil auf, dass diese bündig oder teils zurückversetzt zum Schweller montiert sind und somit nur einen bedingten Schutz bilden. Eine hervorstehende Anordnung des Raumelementes gegenüber dem Schweller ist nicht möglich, da dann die Fahrzeugbreite überschritten wäre oder seitlich hervorstehende Rammschutzelemente gegeben wären.

Der Erfindung liegt deshalb die Aufgabe zugrunde, eine Rammschutzvorrichtung zu schaffen, welche beim Be- und Entladen wirksam eine Ladekante einer Ladefläche schützt und ggf. auftretende Stöße sicher aufnimmt.

Diese Aufgabe wird erfindungsgemäß durch eine Rammschutzvorrichtung gemäß den Merkmalen des Anspruchs 1 gelöst. Weitere vorteilhafte Ausgestaltungen und Weiterbildungen sind in den weiteren Ansprüchen angegeben.

Die erfindungsgemäße Rammschutzvorrichtung ermöglicht, dass vor dem Be- und Entladevorgang der Ladefläche das Rammelement aus einer Verstaulage in eine Rammschutzlage ausfahrbar ist, wobei das Rammelement in der Rammschutzlage gegenüber der Ladekante hervorsteht. Dadurch wird ermöglicht, dass ein wirksamer Schutz, beispielsweise eines Schwellerbereiches und/oder einem weiteren, der Ladekante der Ladefläche zugeordneter Bereich, erzielt wird, so dass bei einer ggf. erfolgenden Unachtsamkeit mit einem Gabelstapler oder einem Hubwagen beim Be- und Entladen der Ladefläche mit Gütern mögliche Beschädigungen durch das Rammelement abgefangen werden. Die Ladekante bzw. der der Ladekanten zugeordnete Bereich und/oder der Schwellerbereich wird dadurch nicht beschädigt. Dadurch können hohe Reparaturkosten vermieden werden.

Des weiteren weist die erfindungsgemäße Rammschutzvorrichtung mit einer stoßabsorbierenden Einrichtung zwischen dem Rammelement und dem Antrieb zum Aus- und Einfahren des Rammelementes den Vorteil auf, dass die ggf. auftretenden Stöße nicht unmittelbar auf den Antrieb wirken, welche das Rammelement aus der Verstaulage in die Rammschutzlage überführt, so dass dessen Funktionalität lange erhalten bleibt. Somit ermöglicht die Rammschutzvorrichtung einen wirksamen und dauerhaften Schutz eines der Ladekante einer Ladefläche zugeordneten Bereichs bzw. eines Schwellerbereichs, welcher der Ladefläche zugeordnet ist.

Eine vorteilhafte Ausgestaltung der Erfindung sieht vor, dass die stoßabsorbierende Einrichtung als Dämpfungselement ausgebildet ist, welche entlang eines vorbestimmten Absorptionsweges eine Stoßkraft reduziert und nach dem Absorbieren der Stoßkraft in seine Ausgangslage zurückkehrt. Dadurch ist zum einen eine wirksame Absorption und zum anderen zumindest ein Dämpfungselement vorgesehen, welches mit Mehrfachstößen belastbar ist.

Nach einer weiteren bevorzugten Ausgestaltung der Erfindung ist vorgesehen, dass die stoßabsorbierende Einrichtung als Dämpfungselement ein Federelement aufweist. Bevorzugt werden beispielsweise Spiralfedem eingesetzt, welche in Abhängigkeit der Einbauanordnung auf Zug oder auf Druck belastbar sind. Bevorzugt werden diese Spiralfedern konstruktiv als Druckfeder eingesetzt. Alternativ zu diesen Spiralfedern können auch Tellerfederpakete als auch weitere Federelemente vorgesehen sein, welche die ggf. auftretenden Stöße dämpfen.

Nach einer alternativen Ausgestaltung der stoßabsorbierenden Einrichtung ist vorgesehen, dass die Dämpfungselemente als gummielastische Dämpfungselemente ausgebildet sind. Diese stoßabsorbierenden Elemente können auch aus einem elastischen oder nachgiebigen thermoplastischen Material ausgebildet sein.

Eine weitere alternative Ausgestaltung der stoßabsorbierenden Einrichtung sieht vor, dass das Dämpfungselement als hydraulisches oder pneumatisches Dämpfungselement ausgebildet ist. Beispielsweise kann eine Hydraulikfederung durch ein Hubkolbensystem vorgesehen sein. Alternativ können als pneumatisches Dämpfungselement Luftpolster oder luftgeladener Hubkolben vorgesehen sein, so dass wiederum eine Stoßabsorption ermöglicht ist.

Des weiteren kann alternativ vorgesehen sein, dass eine der vorgehend ausgeführten Alternativen zur Ausgestaltung eines stoßabsorbierenden Einrichtung mit einem oder mehreren weiteren Dämpfungselementen kombiniert sind.

Die Rammschutzvorrichtung weist gemäß einer vorteilhaften Ausführungsform ein Rammelement auf, welches an einem Tragrahmen vorgesehen ist und an einem Rahmenabschnitt des Tragrahmens oder dem Rammelement die stoßabsorbierenden Einrichtung angreift, welche von einem Träger gehalten ist, der mit dem Antrieb zum Ein- und Ausfahren des Rammelementes fest verbunden ist. Für diese Anordnung kann eine weitest gehende Stoßentkopplung zwischen dem Rammelement und dem Antrieb gegeben sein, wodurch aufgrund der auftretenden Stöße Beschädigungen an dem Antrieb vermieden werden.

Nach einer weiteren bevorzugten Ausgestaltung der Erfindung ist vorgesehen, dass als Antrieb zum Ein- und Ausfahren des Rammelementes ein Mutter-Spindelantrieb vorgesehen ist, wobei die Spindelmutter am Träger befestigt und ein freies Spindelende an einem Halterahmen der Rammschutzvorrichtung durch eine daran angeordnete Lagerstelle gehalten ist. Durch diese Mutter-Spindel-Anordnung kann eine konstruktiv einfache Ein- und Ausfahrbewegung des Rammelementes erzielt werden. Darüber hinaus ist gleichzeitig nach einer vorbestimmten Umdrehungszahl de Spindel sichergestellt, dass die Verstauposition oder Rammschutzposition eingenommen ist und auch erhalten bleibt.

Des weiteren ist bevorzugt vorgesehen, dass beim Einsatz eines Mutter-Spindel-Antriebs die Spindel eine Durchgangsbohrung am Tragrahmen, insbesondere am Rahmenabschnitt, durchquert. Diese Durchbrechung ermöglicht, dass das Rammelement durch einen verwindungssteifen Tragrahmen aufgenommen ist und dennoch ein Ein- und Ausfahren des Rammelementes unter Zwischenschaltung einer stoßabsorbierenden Einrichtung ermöglicht ist.

Des weiteren ist bevorzugt vorgesehen, dass die stoßabsorbierende Einrichtung zumindest zwei Dämpfungselemente aufweist, die jeweils unabhängig voneinander belastbar sind. Dadurch können auch seitlich auftretende Stöße auf das Rammelement sicher aufgenommen werden und eine Stoßabsorption erfolgen.

Des weiteren ist bevorzugt vorgesehen, dass der Antrieb zum Ein- und Ausfahren des Rammelementes als Elektromotor ausgebildet ist. Ein solcher Elektromotor kann als kleinbauende Antriebseinheit an der Rammschutzvorrichtung integriert werden. Bevorzugt an ein 12 V Gleichstrom-Getriebemotor vorgesehen sein, an welchem die Antriebsspindel angeflanscht ist. Durch eine Polumkehrung kann die Ein- und Ausfahrbewegung angesteuert werden.

Alternativ kann auch eine pneumatische oder hydraulische Ansteuerung vorgesehen sein. Darüber hinaus ist auch eine manuelle Betätigung, beispielsweise über einen Bowdenzug oder eine Kurbel, möglich.

Das Rammelement der Rammschutzvorrichtung ist bevorzugt durch zwei Führungen ein- und ausfahrbar gehalten, die an dem Halterahmen befestigt sind. Diese Führungen weisen einen großen Abstand zueinander auf und greifen nahe dem jeweiligen Ende an dem Rammelement an. Dadurch kann eine Verkippung und Verklemmung bei einer seitlich einwirkenden bzw. einer nicht mittig auf das Rammelement einwirkenden Stoßkraft verhindert werden.

Bevorzugt ist des weiteren vorgesehen, dass der Halterahmen das Rammelement, die Führungen zum Ein- und Ausfahren des Rammelementes und den Antrieb des Rammelementes aufnimmt und als Baueinheit an einer Bodengruppe oder an einer Karosserie des Kraftfahrzeugs montierbar ist. Somit kann diese vormontierte Baueinheit als selbstständige Baueinheit an einem Fahrzeug nachrüstbar oder komplett austauschbar vorgesehen sein.

Die bevorzugt als Baueinheit vorgesehene Rammschutzvorrichtung weist ein Gehäuse auf, welches zum ein Aus- und Einfahren des Rammelementes vorzugsweise eine Gehäuseklappe umfasst, die schwenkbar am Gehäuse angeordnet ist. Durch diese Gehäuseverkleidung können die Führungen und der Antrieb gegen Verschmutzung geschützt werden. Gleichzeitig bleibt die Leichtgängigkeit des Antriebs erhalten.

Nach einer weiteren bevorzugten Ausgestaltung der Baueinheit ist vorgesehen, dass das die Baueinheit umgebende Gehäuse eine Gehäuseklappe umfasst, die durch ein Halteelement in einer geschlossenen Position gehalten ist und beim Ausfahren des Rammelementes zwangsweise sich öffnet. Dadurch kann eine einfache Mechanik vorgesehen sein. Das Halteelement ist beispielsweise als Halterung mit einem Federelement ausgebildet, welches die Gehäuseklappe in einer Schließstellung hält. Bei dem Ausfahren wird die Gehäuseklappe zwangsweise geöffnet. Beim Einfahren des Rammelementes schließt aufgrund der aufgebrachten Vorspannung auf das Halteelement die Gehäuseklappe selbstständig.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht einer an einem Fahrzeug angeordneten Rammschutzvorrichtung,
- Figur 2: eine schematische Ansicht auf eine Rammschutzvorrichtung gemäß Figur 1,
- Figur 3: eine schematische Detailansicht einer stoßabsorbierenden Einrichtung,
- Figur 4: eine schematische Ansicht auf eine alternativ Ausführungsform der Rammschutzvorrichtung gemäß Figur 2 und
- Figur 5: eine schematische Ansicht auf eine weitere alternative Ausführungsform der Rammschutzvorrichtung gemäß Figur 1.

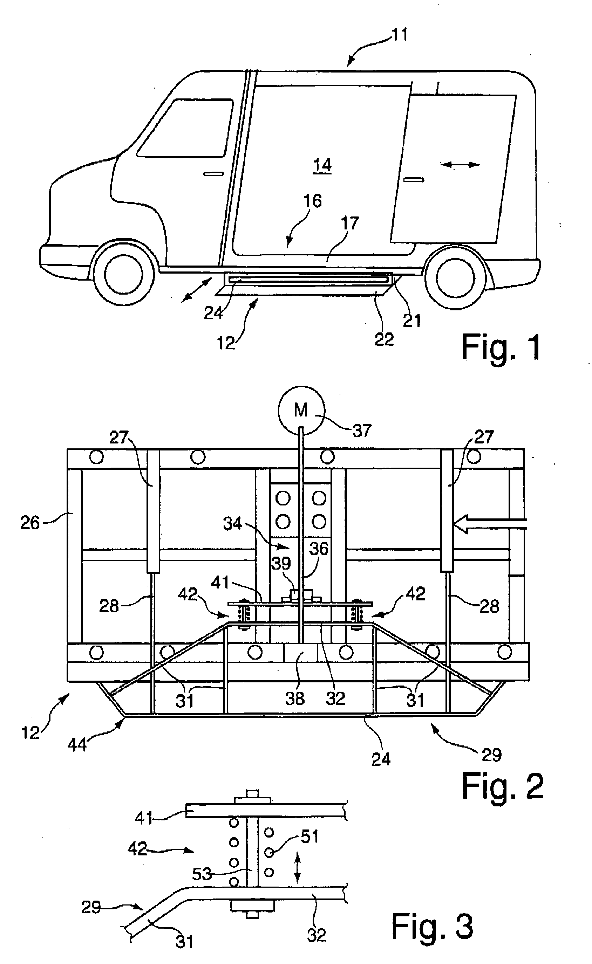

In Figur 1 ist eine schematische Seitenansicht eines Kraftfahrzeuges 11 mit einer Rammschutzvorrichtung 12 dargestellt. Bei diesem Kraftfahrzeug handelt es sich beispielsweise um einen Transporter, dessen Laderaum 14 durch eine seitliche Schiebetür zugänglich ist. Alternativ können weitere Kraftfahrzeuge vorgesehen sein, dessen Laderäume 14 seitlich oder hinten durch Schwenk-, Schiebe- und/oder Kipptüren oder dergleichen zugänglich sind. Der Laderaum 14 umfasst eine Ladefläche 16, welche einer Ladekante 17 zugeordnet ist. Diese Ladekante 17 kann Teil eines Schwellers 18 oder kann gegenüber dem Schweller 18 auch geringfügig in Richtung auf den Laderaum 14 zurückversetzt ausgebildet sein.

Die Rammschutzvorrichtung 12 ist der Ladekante 17 und/oder dem Schweller 18 zugeordnet und an einer Unterseite der Karosserie befestigt. Die Rammschutzvorrichtung 12 ist durch ein Gehäuse 21 vollständig umgeben, so dass ein Schutz gegen Verschmutzung und Beschädigungen, beispielsweise durch Steinschlag, gegeben ist. An einer Vorderseite des Gehäuses 21 ist eine Gehäuseklappe 22 schwenkbar angeordnet, welche zum Aus- und Einfahren eines Rammelementes 24 sich öffnet. Die Gehäuseklappe 22 ist beispielsweise, wie in Figur 1 dargestellt, um eine Schwenkachse schwenkbar gelagert, die an einer unteren Stirnkante angeordnet ist. Bevorzugt ist die Schwenkachse an einer oberen Stirnkante des Gehäuses 21 angeordnet, so dass nach dem Einfahren des Rammelementes 24 die Gehäuseklappe 21 sich selbständig schließen kann. Diese Gehäuseklappe 22 kann manuell geöffnet und geschlossen werden. Des weiteren kann ein Antriebsmechanismus vorgesehen sein, der mit der Aus- und Einfahrbewegung des Rammelementes 24 gekoppelt ist. Darüber hinaus kann die Gehäuseklappe 22 durch einen federbelasteten Seilzug in einer geschlossenen Position gehalten werden, welche beim Ausfahren des Rammelementes 24 aufgedrückt und beim Einfahren des Rammelementes 24 selbstständig schließt.

Die Rammschutzvorrichtung 12 kann alternativ zur Anordnung im seitlichen Schwellerbereich auch einer Stoßstange bzw. einem Stoßfänger zugeordnet sein.

In Figur 2 ist eine schematische Ansicht von oben auf die Rammschutzvorrichtung 12 gemäß Figur 1 dargestellt. Die Rammschutzvorrichtung 12 ist bevorzugt als selbstständige Baueinheit ausgebildet, welche, wie beispielsweise in Figur 2 dargestellt, als Baueinheit durch lösbare Schraubverbindungen an der Karosserie des Fahrzeuges montierbar ist.

Die Rammschutzvorrichtung 12 umfasst einen Halterahmen 26, der beispielsweise als Stahlträgerkonstruktion, insbesondere aus verzinktem Stahlblech, ausgebildet sein kann. An dem Halterahmen 26 sind zwei Führungen 27 vorgesehen, welche ein- und ausfahrbare Stabelemente 28 aufweisen, die an dem Rammelement 24 angreifen. Das Rammelement 24 ist bevorzugt Teil eines Tragrahmens 29, der gesamthaft ein-und ausfahrbar ist. Der Tragrahmen 29 weist beispielsweise Versteifungsstreben 31 auf, die über einen Rahmenabschnitt 32 gehalten sind.

Zum Ein- und Ausfahren des Rammelementes 24 bzw. des Tragrahmens 29 ist ein Antrieb 34 vorgesehen, der gemäß dem Ausführungsbeispiel in Figur 2 als Mutter-Spindelantrieb ausgebildet ist und eine Spindel 36 aufweist, die von einem Elektromotor 37 mit einem Getriebe in Drehung versetzt wird. Der Elektromotor 37 ist an einem inneren Abschnitt des Halterahmens 36 befestigt. Gegenüberliegend ist die Spindel 36 über eine Lagerstelle 38 am äußeren Bereich des Halterahmens 26 bzw. an dem zum Schweller 18 oder der Ladekante 17 weisenden Bereich angeordnet. Eine Spindelmutter 39 greift an einem Träger 41 an, der wiederum durch eine stoßabsorbierende Einrichtung 42 mit dem Rammelement 24, insbesondere mit einem Rahmenabschnitt 32 des Tragrahmens 29, verbunden ist. Bei der in Figur 2 dargestellten Anordnung des Rammelementes 24 befindet sich dieses in einer Rammschutzposition 44. Einer Verstauposition 46 ist strichliniert dargestellt.

Der Rahmenabschnitt 32 weist bevorzugt eine Durchbrechung 48 auf, durch welche die Spindel 36 hindurchgeführt ist, so dass der Tragrahmen 29 ein- und ausfahrbar ist. Alternativ kann vorgesehen sein, dass der Rahmenabschnitt 32 sich nicht parallel zum Träger 41 erstreckt, sondern durch zwei Streben ausgebildet ist, welche an dem Rammelement 24 angreifen. Dadurch bleibt die Ein- und Ausfahrbewegung erhalten und eine steife Tragwerkskonstruktion zur Aussteifung des Rammelementes 24 ist dennoch gegeben. Eine Durchbrechung 48 kann dann entfallen.

In Figur 3 ist schematisch vergrößert die stoßabsorbierende Einrichtung 42 dargestellt. Gemäß einer ersten Ausführungsform umfasst die stoßabsorbierende Einrichtung 42 ein Dämpfungselement 51, welches zwischen dem Rahmenabschnitt 32 und dem Träger 41 wirkt und die beiden Elemente auf Abstand hält. Zur Abstandsbegrenzung der auf den Ruheabschnitt 32 und dem Träger 41 wirkenden Druckkraft des Dämpfungselementes 51 ist ein Stiftelement 53 vorgesehen, welche beispielsweise an jedem Ende eine Verschraubung aufweist. Dadurch kann die Vorspannung des Dämpfungselementes 51 eingestellt und auch der maximale Dämpfungsweg bestimmt werden.

Beim Ausführungsbeispiel gemäß Figur 3 ist das Dämpfungselement 51 als Druckfeder bzw. Spiralfeder ausgebildet. Alternativ oder zusätzlich kann ein Hartgummi als Puffer oder ein weiteres gummielastisches Dämpfungselement vorgesehen sein. Zusätzlich und benachbart zum Dämpfungselement 51 kann beispielsweise am Träger 41 oder Rahmenabschnitt 32 eine Gummikappe vorgesehen sein, welche größer ausgebildet ist, als die Blocklänge des Dämpfungselementes 51, so dass ein Aufeinanderprallen von Träger 41 und Rahmenabschnitt 32 vermieden wird.

Das Dämpfungselement 51 kann auch durch mehrere Druckfedern ausgebildet sein, die parallel nebeneinander oder ineinander geschachtelt sind. Darüber hinaus kann alternativ auch vorgesehen sein, dass Tellerfederpakete oder eine Kombination von Tellerfederpaketen oder Spiralfedern vorgesehen ist. Darüber hinaus kann auch eine konstruktive Ausgestaltung vorgesehen sein, bei der das zumindest eine Dämpfungselement bei auftretenden Stößen auf Zug belastet wird.

Die Ein- und Ausfahrbewegung des Rammelementes 24 aus einer Verstauposition 46 in eine Rammschutzposition 44 und umgekehrt kann beispielsweise über die Anzahl der Spindelumdrehungen erfasst werden. Des weiteren können jeweils Endschalter vorgesehen sein, welche die jeweilige Position 44, 46 erfassen.

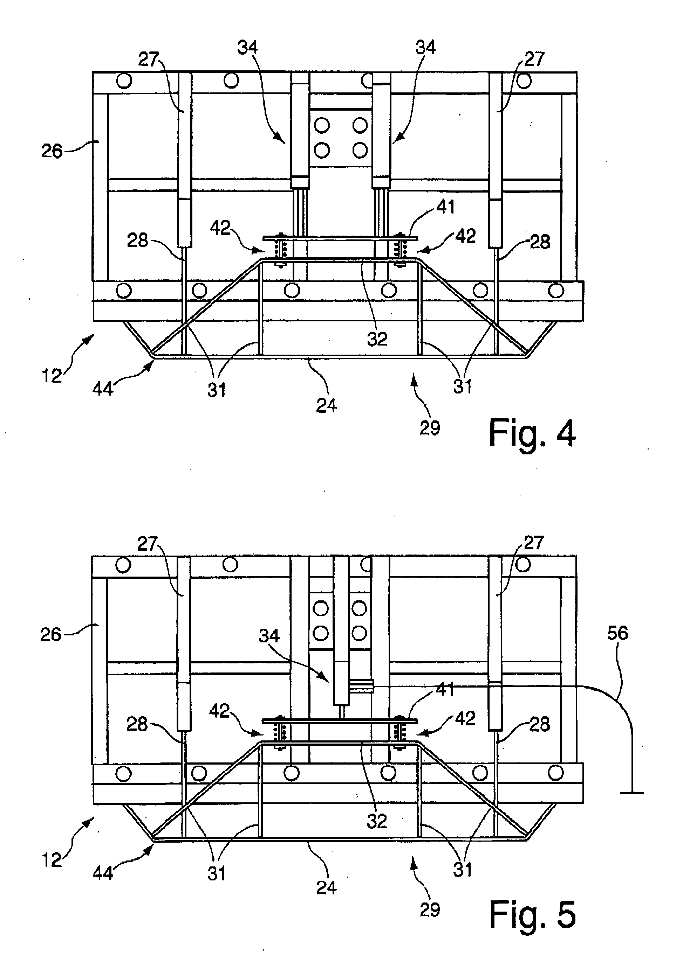

In Figur 4 ist eine alternative Ausführungsform der Rammschutzvorrichtung 12 gemäß Figur 2 dargestellt. Diese Rammschutzvorrichtung 12 unterscheidet sich nur im Antrieb 34 des Rammelementes 24. Die übrigen Ausführungsformen können ebenso bei dieser Rammschutzvorrichtung 12 vorgesehen sein. Beim Antrieb 34 sind beispielsweise ein oder mehrere Hubzylinder vorgesehen, welche hydraulisch oder pneumatisch ansteuerbar sind. Das freie Ende des bzw. der Hubzylinder greifen an den Träger 41 an. Durch diese stoßabsorbierende Einrichtung 42 wird wiederum erzielt, dass keine Stöße auf den Antrieb 34 übertragen wird.

In Figur 5 ist eine weitere alternative Ausführungsform der Rammschutzvorrichtung 12 gemäß Figur 2 dargestellt. Diese Rammschutzvorrichtung 12 unterscheidet sich jedoch nur im Antrieb 34. Dieser Antrieb 34 gemäß Figur 5 ist beispielsweise als manueller Antrieb 34 ausgebildet. Dieser manuelle Antrieb 34 umfasst einen Bowdenzug 56, durch welchen bei einer Zugbelastung beispielsweise ein Verriegelungsbolzen entriegelt wird, der eine Druckfeder freigibt, so dass das Rammelement 24 in die Rammschutzposition 44 manuell übergeführt werden kann. In dieser Endlage bzw. Rammschutzposition 44 kann eine Verrastung vorgesehen sein. Diese kann beispielsweise dadurch erfolgen, dass der Bowdenzug 56 losgelassen wird, so dass der Verriegelungsbolzen diese Rammschutzposition 44 verriegelt. Zum Schutz dieser verriegelten Rammschutzposition 44 ist wiederum die stoßabsorbierende Einrichtung 42 vorgesehen. Das Einfahren des Rammelementes 24 kann dadurch eingeleitet werden, dass der Bowdenzug 56 gezogen wird und das Rammelement 24 manuell in die Verstauposition 46 zurückgeschoben wird. Bei Erreichen dieser Position wird der Bowdenzug 56 wieder gelöst, so dass die Verriegelung der Verstauposition 46 erfolgt. Alternativ kann vorgesehen sein, dass beim Erreichen der Verstauposition 46 eine automatische Verriegelung erfolgt.

## Patentansprüche

1. Rammschutzvorrichtung für ein Kraftfahrzeug, die einer Ladekante (17) einer Ladefläche (16) zugeordnet ist und ein Rammelement (24) aufweist, **dadurch gekennzeichnet,**
- **dass** das Rammelement (24) vor dem Be- und Entladevorgang der Ladefläche (16) mit einem Antrieb (34) zum Schutz der Ladekante (17) aus einer Verstauposition (46) in eine Rammschutzposition (44) ausfahrbar ist und
- **dass** das Rammelement (24) und der Antrieb (34) durch zumindest eine stoßabsorbierende Einrichtung (42) miteinander verbunden sind.

2. Rammschutzvorrichtung nach Anspruch 1, **dadurch gekennzeichnet, dass** die stoßabsorbierende Einrichtung (42) als Dämpfungselement (51) ausgebildet ist, welches entlang eines vorbestimmten Absorptionsweges eine Stoßkraft absorbiert und nach der Absorption der Stoßkraft in seine Ausgangslage zurückkehrt.

3. Rammschutzvorrichtung nach Anspruch 1 oder 2, **dadurch gekennzeichnet, dass** die stoßabsorbierende Einrichtung (42) als Federelement, insbesondere als Spiralfeder, ausgebildet, ist, welches auf Zug oder Druck belastbar ist.

4. Rammschutzvorrichtung nach Anspruch 1 oder 2, **dadurch gekennzeichnet, dass** die stoßabsorbierende Einrichtung (42) als gummielastisches Dämpfungselement ausgebildet ist.

5. Rammschutzvorrichtung nach Anspruch 1 oder 2, **dadurch gekennzeichnet, dass** die stoßabsorbierende Einrichtung (42) als hydraulisches oder pneumatisches Dämpfungselement ausgebildet ist.

6. Rammschutzvorrichtung nach einem der vorhergehenden Ansprüche, **dadurch gekennzeichnet, dass** das Rammelement (24) an einem Tragrahmen (29) vorgesehen ist und an einem Rahmenabschnitt (32) des Tragrahmens (29) oder am Rammelement (24) zumindest eine stoßabsorbierende Einrichtung (42) angreift, welche von einem Träger (41) gehalten ist, der mit dem Antrieb (34) zum Ein- und Ausfahren des Rammelementes (24) fest verbunden ist.

7. Rammschutzvorrichtung nach einem der vorhergehenden Ansprüche, **dadurch gekennzeichnet, dass** als Antrieb (34) zum Ein- und Ausfahren des Rammelementes (24) ein Mutter-Spindelantrieb vorgesehen ist, wobei die Spindelmutter (39) am Träger (41) befestigt ist und vorzugsweise ein freies Ende der Spindel (36) durch eine Lagerstelle (38) am Halterahmen (26) gehalten ist.

8. Rammschutzvorrichtung nach Anspruch 7, **dadurch gekennzeichnet, dass** die Spindel (36) eine Durchgangsbohrung (44) am Rahmenabschnitt (32) des Halterahmens (26) durchquert.

9. Rammschutzvorrichtung nach einem der vorhergehenden Ansprüche, **dadurch gekennzeichnet, dass** die stoßabsorbierende Einrichtung (42) zumindest zwei Dämpfungselemente (51) aufweist, die jeweils unabhängig belastbar und zueinander beabstandet angeordnet sind.

10. Rammschutzvorrichtung nach einem der vorhergehenden Ansprüche, **dadurch gekennzeichnet, dass** der Antrieb (34) zum Ein- und Ausfahren des Rammelementes (24) ein Elektromotor als pneumatische oder hydraulische Antriebseinheit ausgebildet ist.

11. Rammschutzvorrichtung nach einem der vorhergehenden Ansprüche, **dadurch gekennzeichnet, dass** das Rammelement (24) durch wenigstens zwei Führungen (27), die an dem Halterahmen (26) befestigt sind, geführt ist.

12. Rammschutzvorrichtung nach einem der vorhergehenden Ansprüche, **dadurch gekennzeichnet, dass** das Rammelement (24), die Führungen (27) und der Antrieb (34) an einem Halterahmen (26) angeordnet sind und eine Baueinheit bilden, die an einer Bodengruppe oder Karosserie des Kraftfahrzeuges montierbar ist.

13. Rammschutzvorrichtung nach Anspruch 12, **dadurch gekennzeichnet, dass** die Baueinheit zu dessen Schutz ein Gehäuse (21) aufweist, welches vorzugsweise eine schwenkbar angeordnete Gehäuseklappe (22) zum Aus- und Einfahren des Rammelementes (24) aufweist.

14. Rammschutzvorrichtung nach Anspruch 13, **dadurch gekennzeichnet, dass** die Gehäuseklappe (22) durch ein Halteelement in einer geschlossenen Position gehalten ist und beim Ausfahren des Rammelementes (24) die Gehäuseklappe (22) zwangsweise öffnet.

15. Rammschutzvorrichtung nach Anspruch 13 oder 14, **dadurch gekennzeichnet, dass** an einer oberen Stirnkante des Gehäuses (21) die Gehäuseklappe (22) schwenkbar angeordnet ist.
